# EUROPÄISCHE PATENTSCHRIFT

(11) **EP 1 437 590 B1**
(45) Veröffentlichungstag und Bekanntmachung des Hinweises auf die Patenterteilung: **25.07.2012**
(21) Anmeldenummer: 03029748.5
(22) Anmeldetag: 23.12.2003
(51) Int. Cl.: G01N 29/26, G01N 29/22

(54) **Einrichtung zur Ultraschallprüfung eines Werkstückes in Durchschallungstechnik**
Apparatus for ultrasonic examination of a workpiece by a transmission technique
Dispositif pour l'examination ultrasonore d'un échantillon par une technique de transmission

(30) Priorität: 10.01.2003 DE 10300827
(43) Veröffentlichungstag der Anmeldung: 14.07.2004
(73) Patentinhaber: intelligeNDT Systems & Services GmbH, 91052 Erlangen (DE)
(72) Erfinder: Gripp, Sebastian, Dr., 63755 Alzenau (DE)
(74) Vertreter: Mörtel & Höfner

(56) Entgegenhaltungen:
- WO-A1-97/13144
- DE-A1- 4 015 847
- GB-A- 1 226 094
- US-A- 4 881 177
- US-A1- 2002 148 295
- PATENT ABSTRACTS OF JAPAN Bd. 007, Nr. 160 (P-210), 14. Juli 1983 (1983-07-14) -& JP 58 068666 A (KOBE SEIKOSHO KK), 23. April 1983 (1983-04-23)

## Beschreibung

Die Erfindung bezieht sich auf eine Einrichtung zur Ultraschallprüfung eines Werkstückes in Durchschallungstechnik.

Zum Erkennen von oberflächennahen Fehlern und zur Prüfung von Bauteilen aus sog. Sandwich-Material (wabenförmiger Kern mit dünnen Decklagen aus faserverstärktem Kunststoff) ist es von Vorteil, anstelle einer bei der Ultraschallprüfung häufig verwendeten Impuls-Echo-Technik eine Durchschallungstechnik durchzuführen, bei der sich das Werkstück zwischen einem als Ultraschallsender dienenden Prüfkopf und einem als Ultraschallempfänger dienenden Prüfkopf befindet, wie dies beispielsweise aus der JP 58068666 A bekannt ist.

Bei der Ultraschallprüfung eines Werkstückes in Durchschallungstechnik werden die Ultraschall-Prüfsignale zwischen den Prüfköpfen und dem Werkstück in einer Vielzahl von Anwendungsfällen in einem freien Wasserstrahl (Freistrahltechnik) oder über Luft übertragen. Eine solche Prüftechnik, die auch als Squirter-Technik bezeichnet wird, ist insbesondere für die Prüfung von komplex geformten und großen Bauteilen vorgesehen, die nicht in einem Wasserbad eingetaucht geprüft werden können. Ein für die Squirter-Technik geeigneter Prüfkopf ist beispielsweise aus der EP 0 444 578 A2 bekannt.

Bei der Ultraschallprüfung in Durchschallungstechnik ist es erforderlich, dass die einander gegenüberliegenden Prüfköpfe stets koaxial zueinander ausgerichtet sind, wobei die Abweichung von der Koaxialität höchstens 1 mm betragen darf. Aus diesem Grund sind bei den aus der DE 40 15 847 A1, der US 4,881,177 und der GB 1226094 jeweils bekannten Prüfvorrichtungen der Ultraschallsender und der Ultraschallempfänger mechanisch zwangsgekoppelt. Auf diese Weise ist sichergestellt, das Ultraschallsender und Ultraschallwandler bei einer Bewegung entlang der Werkstückoberfläche stets koaxial zueinander ausgerichtet sind.

Der Erfindung liegt nun die Aufgabe zu Grunde, eine Einrichtung zur Ultraschallprüfung eines Werkstückes in Durchschallungstechnik anzugeben, die auch bei großflächigen Werkstücken mit komplizierter Oberflächenform angewendet werden kann.

Die genannte Aufgabe wird gemäß der Erfindung gelöst mit einer Einrichtung mit den Merkmalen des Patentanspruches 1.

Dies ermöglicht die Prüfung großflächiger Werkstücke entlang einer Prüfbahn, deren Linienform je nach Anzahl der Roboterfreiheitsgrade variiert werden kann.

In einer besonders vorteilhaften Ausgestaltung der Erfindung sind die verfahrbaren Konsolen ortsfest an einem gemeinsamen Träger fixierbar. Mit anderen Worten: Erster und zweiter Roboter sind zueinander in einer ortsfesten Relation angeordnet.

Durch die ortsfeste Positionierung des ersten und des zweiten Roboters auf einem gemeinsamen Träger ist sichergestellt, dass die Lage des Koordinatenursprunges der durch den ersten Roboter herbeigeführten Bewegung des ersten Prüfkopfes relativ zur Lage des Koordinatenursprunges der durch den zweiten Roboter herbeigeführten Bewegung des zweiten Prüfkopfes stets gleich ist. Mit anderen Worten: Vom Koordinatenursprung eines Roboters aus betrachtet befindet sich der Koordinatenursprung des anderen Roboters stets an derselben Position, so dass auch durch eine für großflächige Werkstücke erforderliche Fahrbewegung des Trägers eine Relativbewegung der Koordinatenursprünge nicht erfolgt. Durch diese starre Verbindung der Roboterbasen sind die Anforderungen an die Leistungsfähigkeit der Robotersteuerung deutlich verringert, da nur noch für die Anzahl der Freiheitsgrade, mit denen der Prüfkopf vom Roboter selbst bewegt werden kann, eine Synchronisierung oder Koordinierung der Bewegung erforderlich ist.

Da die Anforderungen an die Steuerung mit jedem zusätzlichen Freiheitsgrad zunehmen, ist die Erfindung insbesondere beim Einsatz mehrachsiger Roboter von Vorteil.

In einer besonders vorteilhaften Ausgestaltung der Erfindung ist für jeden Prüfkopf ein sechsachsiger Roboter vorgesehen, mit denen die beiden Prüfköpfe entlang einer räumlich frei vorgebbaren Bahnkurve (3 Freiheitsgrade) unter Beibehaltung ihrer koaxialen und zur Oberfläche des Werkstückes senkrechten Ausrichtung (weitere 3 Freiheitsgrade) über das Werkstück geführt werden können. Dies ermöglichte die Prüfung von Werkstücken mit komplexen Formen.

Weitere vorteilhafte Ausgestaltungen der Erfindung sind in den Unteransprüchen wiedergegeben.

Zur weiteren Erläuterung der Erfindung wird auf das Ausführungsbeispiel der Zeichnung verwiesen. Es zeigen:
- Fig. 1: eine Einrichtung gemäß der Erfindung in einer schemati- schen Perspektivdarstellung,
- Fig. 2: eine Draufsicht auf die Einrichtung mit einem in ihr befindlichen Werkstück ebenfalls in einer schematischen Darstellung.

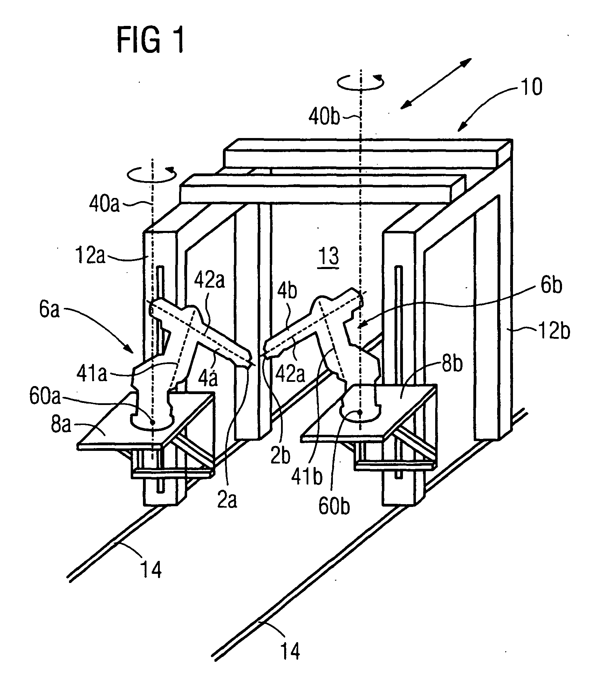

Gemäß Figur 1 befindet sich ein erster Prüfkopf 2a am Ende des Armes 4a eines sechsachsigen ersten Roboters 6a und ein zweiter Prüfkopf 2b am Ende des Armes 4b eines zweiten, ebenfalls sechsachsigen Roboters 6b. Einer der beiden Prüfköpfe 2a, b dient als Ultraschallsender, während der andere Prüfkopf 2b bzw. a als Sender dient. Die Arme 4a, b sind zweigelenkig und drehbar um eine vertikale Achse 40a bzw. b gelagert. Am freien Ende der Arme 4a, b ist der Prüfkopf 2a bzw. b jeweils um drei Handachsen schwenkbar gelagert, so dass die Prüfköpfe 2a, b entlang einer räumlich frei vorgebbaren Prüfbahn auf einander gegenüberliegenden Oberflächen eines beliebig gekrümmten Werkstückes unter Beibehaltung ihrer koaxialen und zur Oberfläche des Werkstückes senkrechten Ausrichtung verfahren werden können. In der Figur sind die Gelenke 41a, 42a bzw. 41b, 42 b der Arme 4a, b gestrichelt angedeutet.

Erster und zweiter Prüfkopf 2a, b sind sogenannte Freistrahl-Ultraschall-Prüfköpfe, bei denen sich der Ultraschall zwischen dem zu prüfenden Werkstück und dem Prüfkopf in einem freien Wasserstrahl ausbreitet. Alternativ kann mit entsprechenden Köpfen (Wandlern) die Schallausbreitung auch durch Luft erfolgen. Um eine Ultraschallprüfung in Durchschallungstechnik zu ermöglichen, ist es notwendig, die Prüfköpfe 2a, b während der Messung exakt aufeinander auszurichten und diese koaxiale Ausrichtung auch bei einem Verfahren der Prüfköpfe 2a, b entlang der Prüfbahn aufrecht zu erhalten, d. h. die Bewegung der Roboter 6a, b muss synchronisiert oder koordiniert erfolgen.

Um das Prüfvolumen, d. h. das Größen- und Formenspektrum möglicher Prüfstücke über die Reichweite (Arbeitszelle) eines einzelnen Roboters hinaus zu erweitern, ist jeder Roboter 6a, b mit seiner Basis 60a, bzw. b auf einer verfahrbaren Konsole 8a, b gelagert. Die Konsolen 8a, b sind auf einem gemeinsamen Träger 10 fixiert. Der Träger 10 wird im Ausführungsbeispiel durch eine Brücke mit zwei Stützen 12a, b gebildet, die einen Messraum 13 zur Aufnahme eines Werkstückes überspannt. Die Konsolen 8a, b sind an einander gegenüberliegenden Stützen 12a bzw. b in vorgegebene Positionen (Raststellungen) höhenverstellbar angeordnet, um auch Werkstücke prüfen zu können, deren Höhe den Aktionsradius der Roboter 6a, b überschreitet. Zusätzlich kann auch eine horizontale Verstellbarkeit der Konsolen 8a, b vorgesehen sein, um die Reichweite der Roboter an das jeweilige Werkstück anpassen zu können. Während der Messung, d. h. während der Fahrbewegung der Prüfköpfe 2a, b entlang einer vorgegebenen Prüfbahn sind die Konsolen 8a, b am Träger 10 ortsfest fixiert.

Die Stützen 12a, b sind in Schienen 14 geführt, so dass der Träger 10 und damit die Konsolen 8a, b linear verfahren werden kann, wie dies in der Figur durch einen Doppelpfeil veranschaulicht ist. Bei dieser Fahrbewegung bleibt die relative Position der Roboterbasen 6a, b erhalten, so dass bei der Steuerung der beiden Roboter 6a, b ein Freiheitsgrad (bei einer Linearbewegung des Trägers 10) weniger koordiniert werden muss. Im Ausführungsbeispiel werden somit die Konsolen 8a, b gemeinsam durch die Linearbewegung des Trägers 10 verfahren. Alternativ hierzu kann auch eine individuelle Verfahrbarkeit der Konsolen und damit der Roboterbasen vorgesehen sein. Dann ist der Steuerungsaufwand für die Bewegungskoordination entsprechend erhöht.

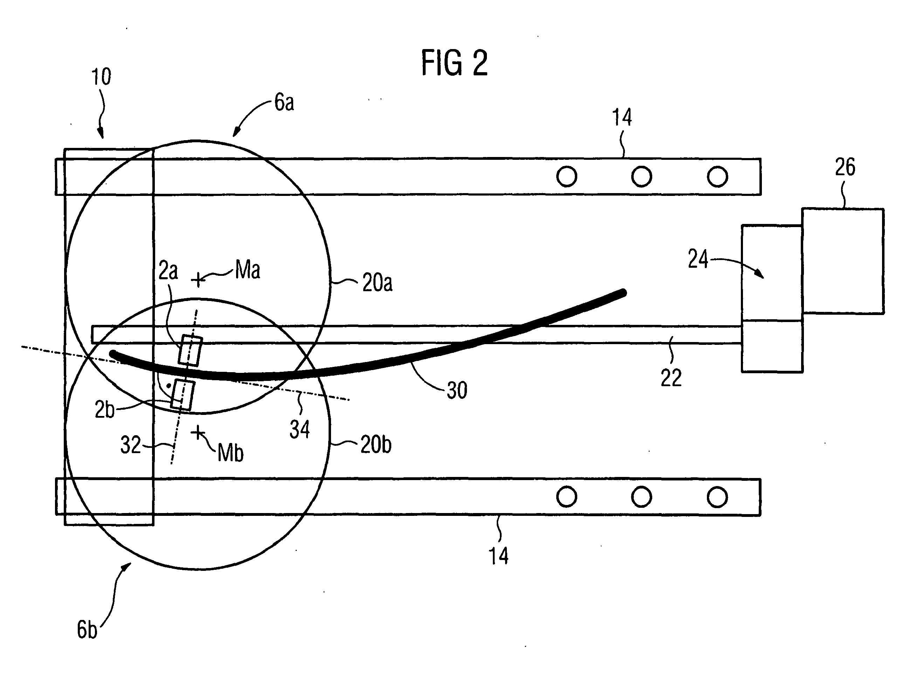

In der Draufsicht gemäß Figur 2 sind mit Kreisen 20a, b die Aktionsradien des ersten bzw. zweiten Roboters 6a, b angedeutet. Die Mittelpunkte Ma, Mb dieser Kreise 20a, b sind in einer ortsfesten Position zueinander, d. h. ihre relative Position verändert sich während der Fahrbewegung des Trägers 10 nicht. In der Figur ist außerdem zu erkennen, dass zwischen den Schienen 14 ein Sammelkanal 22 verläuft, der das aus den Prüfköpfen 2a, b jeweils austretende Wasser sammelt und einem Sumpf 24 zuführt, aus dem es mit Hilfe einer Pumpenstation 26 abgepumpt wird.

Zwischen dem ersten und dem zweiten Prüfkopf 2a, b ist ein zu untersuchendes, in Längsrichtung ausgedehntes Werkstück 30 angeordnet. Erster und zweiter Prüfkopf 2a, b sind während der Prüfung koaxial zueinander (Sende- und Empfangsmittenachse 32 fallen zusammen) und senkrecht zur Oberfläche des Werkstückes 30 (Sende- und Empfangsmittenachse 30 stehen senkrecht auf Tangente 34) ausgerichtet, so dass der Wasserstrahl des beispielsweise als Ultraschallsender dienenden ersten Prüfkopfes 2a auf das Werkstück 30 an einer Stelle auftrifft, die dem Auftreffpunkt des Wasserstrahles des als Ultraschallempfänger dienenden zweiten Prüfkopfes 2b gegenüber liegt. Durch die Verwendung sechsachsiger Roboter 6a, b können auch Werkstücke 30 geprüft werden, die mehrachsig stark gekrümmte Oberflächen aufweisen.

## Patentansprüche

1. Einrichtung zur Ultraschallprüfung eines Werkstückes (30) in Durchschallungstechnik, mit verfahrbaren Konsolen (8a,8b) sowie einem ersten und einem zweiten Roboter (6a,6b) mit einem als Ultraschallsender dienenden ersten Prüfkopf (2a) und einem als Ultraschallempfänger dienenden zweiten Prüfkopf (2b), wobei der erste Prüfkopf (2a) an einem Arm (4a) des ersten und der zweite Prüfkopf (2b) an einem Arm (4b) des zweiten Roboters (6a bzw. b) jeweils mit zumindest einem Freiheitsgrad frei bewegbar angeordnet sind und durch Koordinierung der Bewegung der Arme (4a,4b) koaxial zueinander und senkrecht zu einer Oberfläche eines Werkstückes (30) ausgerichtet entlang der Oberfläche verfahren werden können, wobei die Roboter (6a, b) jeweils ortsfest auf einer verfahrbaren Konsole (8a, b) positioniert sind.

2. Einrichtung nach Anspruch 1, bei der die verfahrbaren Konsolen ortsfest an einem gemeinsamen Träger (10) fixierbar sind.

3. Einrichtung nach Anspruch 2, bei der als Träger (10) eine Brücke vorgesehen ist, die einen das Werkstück (30) aufnehmenden Messraum (13) überspannt, wobei die Konsolen (8a, b) an einander gegenüberliegenden Stützen (12a bzw. b) angeordnet sind.

4. Einrichtung nach Anspruch 3, bei der die Konsolen (8a, b) in vorgegebene Positionen verstellbar an der jeweiligen Stütze (12a bzw. b) angeordnet sind.

5. Einrichtung nach Anspruch 4, bei der die Stützen (12a, b) in Schienen (14) geführt sind.

6. Einrichtung nach einem der vorhergehenden Ansprüche, bei der sechsachsige Roboter (6a, b) vorgesehen sind.

## Claims

1. Device for the ultrasonic testing of a work piece (30) using the transmission technique, with moveable brackets (8a, 8b) and a first robot (6a) and a second robot (6b), with a first probe (2a) serving as an ultrasonic transmitter and a second probe (2b) serving as an ultrasonic receiver, whereby the first probe (2a) is located on an arm (4a) of the first robot (6a) and the second probe (2b) is located on an arm (4b) of the second robot (6b), each respectively arranged to be free to move with at least one degree of freedom and through coordination of the movement of the arms (4a, 4b) able to move coaxially with respect to each other and traversed perpendicular to and around a surface of a work piece (30) whereby the robots (6a, 6b) are each in a fixed position on moveable brackets (8a, 8b).

2. Device according to Claim 1, where the moveable brackets can be fixed in position on a common support (10).

3. Device according to Claim 2, in which a bridge is provided as the support (10) that spans a precision measurement area (13) containing the work piece (30), whereby the brackets (8a, 8b) are positioned on supports facing each other (12a, 12b).

4. Device according to Claim 3, in which the brackets (8a, 8b) are arranged to be adjustable in prescribed positions on the respective supports (12a, 12b).

5. Device according to Claim 4, in which the supports (12a, 12b) are guided in rails (14).

6. Device according to the previous claims, in which 6-axis robots (6a,6b) are provided.

## Revendications

1. Dispositif de contrôle par ultrasons d'une pièce (30) en technique de transmission, comprenant des consoles (8a, 8b) déplaçables ainsi qu'un premier et un deuxième robots (6a, 6b) ayant une première tête (2a) de contrôle servant d'émetteur d'ultrasons et une deuxième tête (2b) de contrôle servant de récepteur d'ultrasons, la première tête (2a) de contrôle étant montée sur un bras (4a) du premier robot (6a) et la deuxième tête (2b) de contrôle sur un bras (4b) du deuxième robot (6b) en étant mobiles librement respectivement avec au moins un degré de liberté et pouvant, par coordination du mouvement des bras (4a, 4b), être déplacées coaxialement entre elles et perpendiculairement à une surface d'une pièce (30) le long de la surface, les robots (6a, b) étant positionnés respectivement à poste fixe sur une console (8a, b) déplaçable.

2. Dispositif suivant la revendication 1, dans lequel les consoles déplaçables peuvent être immobilisées à poste fixe sur un support (10) commun.

3. Dispositif suivant la revendication 2, dans lequel il est prévu comme support (10) un pont, qui enjambe un espace (13) de mesure recevant la pièce (30), les consoles (8a, b) étant disposées sur des jambages (12a et b) opposés l'un à l'autre.

4. Dispositif suivant la revendication 3, dans lequel les consoles (8a, b) sont réglables en des positions prescrites sur les jambages (12a et b) respectifs.

5. Dispositif suivant la revendication 4, dans lequel les jambages (12a, b) sont guidés dans des rails (14).

6. Dispositif suivant l'une des revendications précédentes, dans lequel il est prévu des robots (6a, b) à six axes.
